# EUROPEAN PATENT SPECIFICATION

(11) **EP 4 163 875 B1**
(45) Date of publication and mention of the grant of the patent: **09.09.2026**
(21) Application number: 21201910.3
(22) Date of filing: 11.10.2021
(51) Int. Cl.: G06T 19/00

(54) **ASSET AND COLLISION VISUALISATION**
ANLAGEN- UND KOLLISIONSVISUALISIERUNG
VISUALISATION DE COLLISION ET D'ACTIFS

(43) Date of publication of application: 12.04.2023
(73) Proprietor: Siemens Schweiz AG, 8047 Zürich (CH)
(72) Inventor: Blatter, Sandro, 9015 St. Gallen (CH); Zechlin, Oliver, 6300 Zug (CH)
(74) Representative: Siemens Patent Attorneys

(56) References cited:
- US-A1- 2016 210 790
- US-A1- 2019 385 373
- JUNGHANNS SEBASTIAN ET AL: "Employing location-aware handheld augmented reality to assist utilities field personnel", 1 January 2009 (2009-01-01), XP055896011, Retrieved from the Internet <URL:https://arbook.icg.tugraz.at/schmalstieg/Schmalstieg_140.pdf> [retrieved on 20220228]

## Description

### FIELD OF THE INVENTION

The present invention relates generally to the technical field of building management systems or building automation systems comprising a plurality of building devices, e.g. controllers and field devices. In particular the present invention relates to a method and an arrangement for displaying devices (e.g. assets, controller, sensor, activator) located in an enclosure (e.g. building, train, vehicle, campus) on an output device (e.g. smartphone, tablet-computer, AR glasses) of a user.

### BACKGROUND

During the installation of various sensors and devices within a building or enclosure (train body etc.), their distance to each other plays an important role. It is difficult to envision the other sensor devices because the installation happens at various times by most of the time different technicians or service staff. Often the disciplines are separated. Certain sensors etc. can interfere with other sensors. The technician installing a sensor or a device "a" might not be aware of sensor or device "b" - which might cause interference with sensor or device "a". This is the breeding ground for miscommunica-tion and leads to delays and extra costs during construction, as well as afterwards. After the installation of a device or a sensor and as soon as technical problems occur with regard to the device or the sensor, there is the problem of locating the specific error producing device or sensor. That search for locating the error producing device or sensor and identifying other devices which interfere with the error producing device or sensor is very time consuming. US 2019/385373 A1 (MITTLEMAN ADAM [US] ET AL) 19 December 2019 discloses a method of augmented reality (AR), in which location and coverage area of multiple smart devices are overlaid onto the user's view of the scene.

### SUMMARY OF THE INVENTION

The object of the invention is to provide an efficient method and an efficient arrangement to locate an error producing device and identify other devices which interfere with said device.

The invention is defined by the appended independent claims.

Further aspects of the invention are a computer program product and a computer-readable storage medium comprising instructions which, when the program is executed by a computer, cause the computer to carry out the steps of the inventive method according to claim 1.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates an exemplary flowchart of method for displaying devices located in an enclosure on an output device,
- FIG 2: illustrates an exemplary arrangement for displaying devices located in an enclosure on an output device,
- FIG 3: illustrates a first exemplary image of a display to display a user defined area of an enclosure on an output device, and
- FIG 4: illustrates a second exemplary image of a display to display a user defined area of an enclosure on an output device.

### DETAILED DESCRIPTION

During construction in a building the installation of the equipment (devices, sensors, etc.) are often on a "first come first serve" basis. Which means that the technician gets to place and installs his devices first and where he/she thinks is most suitable. The construction plan is often ignored for the technician's comforts sake. The problem does not get solved but implicitly handed over to the next person that must deal with the situation. In addition, the drift off as-planned to as-built gets bigger.

After installation, a technician must navigate to the faulty sensor, if something needs to get fixed or optimized. After reaching it, that person must find ideally all the adjacent device by looking for them. This search often includes the dismantling of lowered ceilings and hoping the next hint (device) will be found there. The bigger context, the overview of the situation is only achieved after hours of search and even then, devices could be looked over.

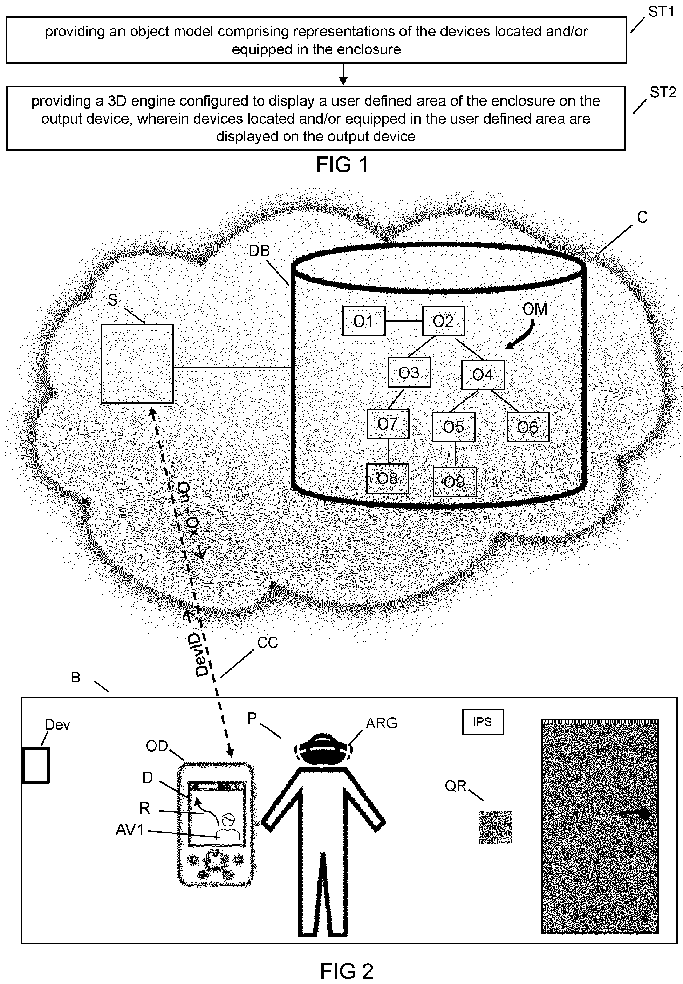

Figure 1 illustrates an exemplary flowchart of a method for displaying devices (assets, controller, sensor, activator) located in an enclosure (e.g. building, train, vehicle, campus) on an output device (e.g. smartphone, tablet-computer, AR glasses (Augmented Reality glasses)) of a user, the method comprising:
providing an object model (e.g. BIM, IFC, CAD model) comprising representations of the devices located and/or equipped in the enclosure;
providing a 3D engine configured to display a user defined area of the enclosure on the output device, wherein devices located and/or equipped in the user defined area are displayed on the output device. Advantageously the object model comprises attributes and/or relationships between the respective devices. Relationships between devices can be e.g. communication-relationship, sender-receiver-relationship, master-slave-relationship, sensor-actor-relationship, functional-relationship, spatial-relationship (e.g. installed in the same local area (e.g. installed in the same room).

The method can be performed by using commercial off the shelf (COTS) devices which are configured and equipped with suitable HW means and software programs. For instance, the output device can be a smartphone or a tablet computer or Augmented Reality glasses. Advantageously a route to the user defined area is displayed on the output device to route the user (e.g. commissioner or service person) to the user defined area in the enclosure (e.g. a building). Advantageously displaying and tracking the route is supported by an Indoor-Positioning-System (iBeacons, WLAN, etc). For example, IFC notation (industry foundation class) can be used as object model notation. The method can be realized by using a cloud infrastructure, comprising a cloud server with access to the object model. The cloud server comprises means for processing, communicating, and storing.

The object model can be stored locally in a memory of the output device (e.g. a mobile communication device), partly or completely).

The object model can also be stored on the server and streamed and/or mirrored and/or loaded from the server to the output device.

According to Wikipedia an avatar is a graphical representation of a user or the user's character or persona. It may take either a two-dimensional form as an icon in Internet forums and other online communities or a three-dimensional form, as in games or virtual worlds.

Advantageously displaying the route comprises the illustration of the avatar on the route.

According to Wikipedia a 3D engine or graphics engine is a part of a computer program or computer hardware, a so-called engine, which is responsible for the representation of computer graphics. In most cases, this involves 3D computer graphics that are as realistic as possible, such as objects, the environment and people (keyword: virtual reality). In the context of 3D computer graphics, the graphics engine is therefore also referred to as a 3D engine.

The 3D engine can illustrate the user defined area e.g. in 2D graphic or in 3D graphic (e.g. in form of a sphere) on the display of the output device.

According to Wikipedia Augmented reality (AR) is an interactive experience of a real-world environment where the objects that reside in the real world are enhanced by computer-generated perceptual information, sometimes across multiple sensory modalities, including visual, auditory, haptic, soma-tosensory and olfactory. AR can be defined as a system that incorporates three basic features: a combination of real and virtual worlds, real-time interaction, and accurate 3D registration of virtual and real objects. The overlaid sensory information can be constructive (i.e. additive to the natural environment), or destructive (i.e. masking of the natural environment). This experience is seamlessly interwoven with the physical world such that it is perceived as an immersive aspect of the real environment. In this way, augmented reality alters one's ongoing perception of a real-world environment, whereas virtual reality completely replaces the user's real-world environment with a simulated one. Augmented reality is related to two largely synonymous terms: mixed reality and computer-mediated reality. The primary value of augmented reality is the manner in which components of the digital world blend into a person's perception of the real world, not as a simple display of data, but through the integration of immersive sensations, which are perceived as natural parts of an environment.

The output device is configured to illustrate the experience of a real-world environment of the user defined area of the enclosure (e.g. building). The output device can be a mobile communication device (e.g. smart phone) and/or Augmented reality glasses. Today Augmented reality glasses are commercials off the shelf (COTS), e.g. HoloLens from Microsoft. Advantageously user defined types of devices located in the defined area are displayed on the output device. Advantageously the user defined area is illustrated on the output device as sphere or as cube or as cuboid. Advantageously a device (e.g. a controller or a sensor or an actor) selected by the user presents the center point of the defined area of the enclosure.

According to the invention, all devices located in the user defined area of the enclosure which are in correlation (e.g. communication, part of the same subsystem, functional relationship) with a device selected by the user are displayed on the output device. Advantageously the user defined area is illustrated as Asset-Aura illustrating the asset (e.g. device to be analyzed or checked) and the interdependencies and/or collisions of said asset (device) to other devices in a 3D-sphere visualization.

Advantageously user selectable types of correlation are displayed on the output device. Advantageously user selectable types of correlation (e.g. communication-correlation, master-slave-correlation, spatial-correlation (e.g. located in the same area or room), functional-correlation) are displayed on the output device in the Asset-Aura.

Advantageously the user is displayed on the output device as a pointer (e.g. an arrow or a point or a marking), especially as an avatar, being positioned on the current position of the user in the user defined area of the enclosure.

Advantageously the pointer or avatar illustrated on the output device is kept on track and synchronized with the position of the user by scanning landmark codes (e.g. QR code) attached in the building and/or by radio and/or audio and/or camera means of the output device. The scanning can be performed by a scan-App and a camera of the output device (e.g. smartphone, tablet-computer).

Advantageously the output device is a smartphone and/or a tablet computer and/or AR-glasses (Augmented Reality glasses).

Advantageously the object model is a building information model (BIM, e.g. in IFC notation, Industry Foundation Class) and/or a CAD model and/or a UNITY-based rendered model.

The method can be realized in an online-mode or in an offline-mode. In the online-mode the output device is connected permanently with a server (e.g. cloud server) providing the object model (e.g. BIM Model). In the offline-mode the object model is stored locally on the output device. Advantageously the user can switch between online-mode and offline-mode. Advantageously during online-mode an object model stored locally on the output device can be updated and/or synchronized according to an object model stored in a server (e.g. cloud server). Advantageously information regarding the device (e.g. asset to be navigated to and/or to be analyzed) is provided and displayed to the user on the output device. Advantageously the user can retrieve information about the device and/or communicate and/or interact directly with the device (e.g. an IoT device, connected to the Internet). Optionally this interaction is then also stored directly in the asset, sent to a server, and/or first kept locally and later optionally "synchronized".

Further aspects of the invention are a computer program product and a computer-readable storage medium comprising instructions which, when the program is executed by a computer, cause the computer to carry out the steps of the inventive method for navigating a user to a device located in a building.

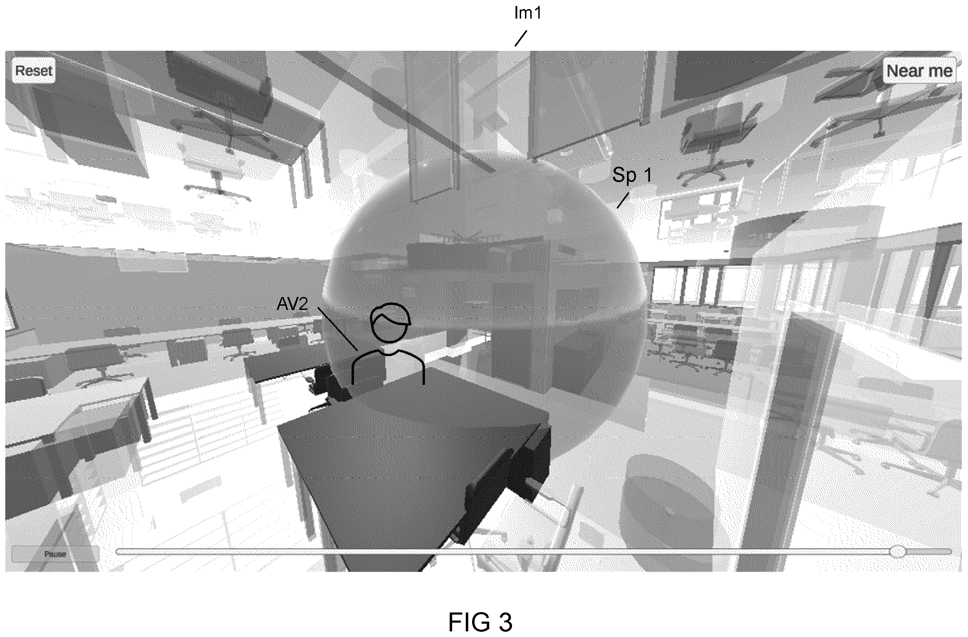

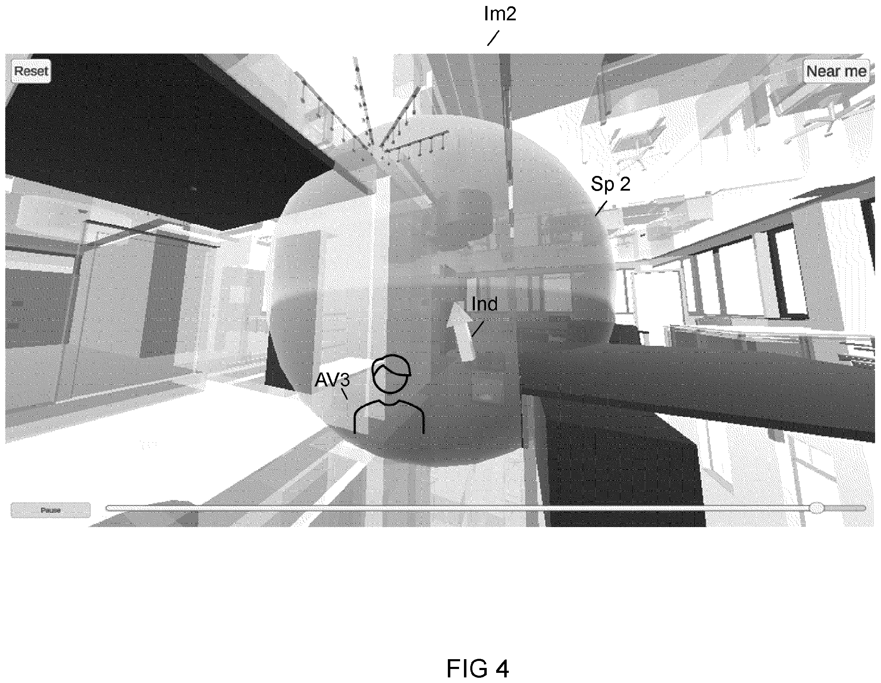

Figure 2 illustrates an exemplary arrangement for displaying devices Dev (e.g. assets, controller, sensor, activator) located in an enclosure B (e.g. building, train, vehicle, campus) on an output device OD, ARG (e.g. smartphone, tablet-computer, AR glasses) of a user P (e.g. commissioner, service engineer, facility manager), the arrangement comprising:
processing means S configured to provide an object model OM (e.g. BIM, IFC, CAD model) comprising representations of the devices Dev located and/or equipped in the enclosure B; and
an output device OD, ARG comprising a 3D engine configured to display a user defined area (Sp1, Sp2, see figures 3 or 4) of the enclosure B on the output device OD, ARG wherein devices Dev located and/or equipped in the user defined area (Sp1, Sp2, see figures 3 or 4) are displayed on a suitable screen or display D of the output device OD, ARG.

Advantageously the object model OM (e.g. BIM, IFC, CAD model) representing the devices Dev in a suitable notation as objects O1 - On of the model OM also comprises attributes of the respective device (location in the enclosure, manufacturer, year of commissioning, etc.) and relationships to other devices.

Relationships between devices can be e.g. communication-relationship, sender-receiver-relationship, master-slave-relationship, sensor-actor-relationship, functional-relationship, spatial-relationship (e.g. installed in the same local area (e.g. installed in the same room).

Advantageously for determining the position of the user P in the enclosure B (e.g. building) an Indoor-Positioning-System IPS (e.g. iBeacons, BLE, WLAN) is used. The output device OD, ARG is configured to communicate with the Indoor-Positioning-System IPS to determine the position of the output device OD, ARG.

The arrangement can be realized in an online-mode or in an offline-mode. In the online-mode the output device OD, ARG is connected permanently with a server S (e.g. cloud server) providing the object model OM (e.g. BIM Model). In the offline-mode the object model OM is stored locally on the output device. Advantageously the user can switch between online-mode and offline-mode. Advantageously during online-mode an object model OM stored locally on the output device OD, ARG can be updated and/or synchronized according to an object model OM stored in the server S (e.g. cloud server). Advantageously information regarding the device Dev (e.g. asset to be navigated to) is provided and displayed to a user P on the screen or display D of the output device OD, ARG. Advantageously the user P can retrieve information about the device and/or communicate and/or interact directly with the device Dev (e.g. an IoT device, connected to the Internet).

By using suitable communication connections CC (e.g. WLAN, radio, Internet) the output device OD, ARG of the user P communicates with the server S. The output device OD, ARG is providing the identification DevID (a unique and unambiguous label, number, marking, or description) of the device Dev (e.g. asset) to be checked and analyzed, e.g. for misfunction or failure analysis and/or failure detection).

The server S has access to a memory DB where the object model OM is stored. The objects O1 - O9 are representing the devices located or installed in the enclosure B (e.g. building). Based on the identification DevID of the device Dev (to be located and analyzed) the server S provides the respective objects On - Ox representing the device Dev and the objects representing devices which are in correlation and/or relationship with the device Dev. Relationships between devices can be e.g. communication-relationship, sender-receiver-relationship, master-slave-relationship, sensor-actor-relationship, functional-relationship, spatial-relationship (e.g. installed in the same local area (e.g. installed in the same room).

The output device OD, ARG comprises a 3D engine configured to display a user defined area (Sp1, Sp2, figures 3 or 4) of the enclosure B on a suitable screen or display of the output device OD, ARG, wherein devices located and/or equipped in the user defined area (Sp1, Sp2, figures 3 or 4) are displayed on the output device OD, ARG.

Advantageously the server S, the Indoor-Positioning-System IPS, and the output device OD, ARG are configured to collaborate to determine and/or to provide a route R to the location of the device Dev in the enclosure B.

Advantageously the output device OD is configured to display all devices located in the user defined area of the enclosure B which are in correlation (e.g. communication, part of the same subsystem, functional relationship) with a device Dev selected by the user.

Advantageously the output device OD is configured to display user selectable types of correlation (e.g. sensor-actor-correlation, master-slave-correlation).

Advantageously the user P is displayed on the output device as an avatar AV1 being positioned on the current position of the user P in the user defined area of the enclosure B.

Advantageously the avatar AV1 illustrated on the output device OD, ARG is kept on track and synchronized with the position of the user P by scanning landmark codes (e.g. QR code) attached in the building and/or by radio and/or audio and/or camera means of the output device OD, ARG.

Advantageously the output device OD, ARG is a smartphone, and/or a tablet computer, and/or AR-glasses (Augmented Reality glasses).

Advantageously the object model OM is a building information model (BIM) and/or a CAD model and/or a UNITY-based rendered model. The object model OM comprises objects O1 - O9 comprising representations of the devices Dev located and/or equipped in the enclosure B. The objects O1 - O9 comprising attributes of the respective devices Dev and information regarding relationships and/or correlation of a device (e.g. asset) Dev to other devices.

Advantageously the server S is part of a cloud infrastructure C or implemented in a cloud infrastructure C.

Advantageously the invention uses a precise BIM-/IFC-/CAD-model as object model OM and a 3D Engine to locate every adjacent and/or connected device of a certain device Dev. Ideally it has a companion app which can be used on a Smart Device (smartphone etc.), where the interfacing between model and engine makes for an easy-to-understand and easy-to-operate environment. The system merges the information of the model OM (which has most likely a detail list of all assets, their parameters, as well as their location data) and provides the asset data to 3D graphics engine where the visualization takes place: For instance, a spherical collision of all or selected asset-classes devices is simulated and all collisions with it, that have a device Dev with a certain ID (DevID) will be listed and highlighted. The radius of the simulated collision sphere (Sp1, Sp2, figures 3 or 4) is variable and can be adjusted by the user P at any time. Optionally, the user P can select a situation-specific polygon shape which he/she finds most suitable to improve the search result. Example: the technician is located within a office building which both has underfloor, as well as behind lowered-ceiling mounted sensors. In order to locate all these sensors underneath and overhead, he/she chooses a rectangular polygon which can be increased in size to cover the floor-to-ceiling space - but being limited to it (to not also see the sensors the floor below/above). On the other hand, a technician within the nacelle of a wind turbine, or the inside of a train, could prefer to use an elliptical shape in order to mimic the enclosure or space he or she is in, thereby trying to limit the list of sensors for the inside devices, without having the external sensors or devices listed as well.

Advantageously the presented invention can also be used during the construction phase. The installation phase of a sensor or device can be simplified and sped up. Fire Detection sensors for example, have to comply to standards and regulations in terms of installation and placement, for example: no other sensors must be placed within a regulated radius around it. To quickly check if everything is at the exact place according to plan and spec, the invention provides the technician with a quick and easy overview of the whole situation around him or her.

Using different colors, or other audio-visual cues, the interference probability and severity could be used to make the technician more aware of the situation.

Furthermore, in order to match real-life-position of the person with the model, it should be possible to "sync" as-is position with audio-visual display on the output device OD, ARG (e.g. Smart Device). In order to achieve this, QR codes QR, AR, RF, location engine or other means typically used for this kind of scenario. Hence optionally the model displayed should move along the position of the person P.

Advantages of the invention are especially that a user P (e.g. technician) uses less time to grasp an understanding and context of a given situation. Due to the analysis of the invention the person has gained a quick overview of the technical situation in a 3D-environment. That equals to more time solving the problem, and less "waste of time". The person P has in seconds an overview of all components that are potentially adding to the faulty sensor or device Dev.

During construction, there is an incentive to work more according to plan, because the plan is much easier to read and understand. With the help of the invention the installer has a quick overview where he must install his devices.

Figure 3 illustrates a first exemplary image Im1 of a display to display a user defined area Sp1 of an enclosure on an output device (e.g. smartphone, tablet-computer, Augmented Reality glasses). In figure 3 the user defined area Sp1 is exemplary illustrated as a sphere. Advantageously the center point of the sphere Sp1 is the device or asset to be analyzed. The center point of the sphere Sp1 can be determined by the user, for instance by, a fingertip on the screen or display. Also, the radius of the sphere Sp1 can be determined by the user. For instance, by expanding the size of the sphere Sp1 1 on the screen or display with the fingers. Furthermore, figure 3 illustrates a schematic graphic of the enclosure and an avatar AV2 representing the user and the position the user in the enclosure (e.g. building).

Figure 4 illustrates a second exemplary image Im2 of a display to display a user defined area of an enclosure on an output device (e.g. smartphone, tablet-computer, Augmented Reality glasses). In figure 4 the user defined area Sp2 is exemplary illustrated as a sphere. Furthermore, figure 4 illustrates a schematic graphic of the enclosure and an avatar AV3 representing the user and the position the user in the enclosure (e.g. building). In figure 4 an exemplary indicator Ind points to the position of the device to be analyzed in the user defined area Sp2. In figure 4 the exemplary indicator Ind is exemplary illustrated as pointer or arrow.

A method and an arrangement for displaying devices (e.g. assets, controller, sensor, activator) located in an enclosure (building, train, vehicle, campus) on an output device (e.g. smartphone, tablet-computer, AR glasses) of a user,
wherein an object model (e.g. BIM, IFC, CAD model) comprising the devices located and/or equipped in the enclosure is provided; and
wherein a 3D engine configured to display a user defined area of the enclosure on the output device, wherein devices located and/or equipped in the user defined area are displayed on the output device is provided.

### Reference Signs

- OM: Object Model
- O1 - O9, On - Ox: Object
- Dev: Device
- DevID: Device Identifier
- Im1, IM2: Image
- Sp1, Sp2: Sphere
- Ind: Indicator
- D: Display
- B: Building
- ARG: AR-glasses
- R: Route
- AV1 - AV3: Avatar
- S: Server
- DB: Database
- C: Cloud
- P: User
- IPS: Indoor-Positioning System
- CC: Communication Connection
- OD: Output Device
- QR: QR-code
- ST1 - ST2: Step

## Claims

1. A method for displaying devices (Dev) located in an enclosure (B) on an output device (OD, ARG) of a user (P), the method comprising:
(ST1) providing an object model (OM) comprising representations (O1 - O9) of the devices (Dev) located and/or equipped in the enclosure (B);
(ST2) providing a 3D engine configured to display a user defined area (Sp1, Sp2) of the enclosure (B) on the output device (OD, ARG), wherein devices (Dev) located and/or equipped in the user defined area (Sp1, Sp2) are displayed on the output device (OD, ARG);
wherein all devices (Dev) located in the user defined area (Sp1, Sp2) of the enclosure (B) which are in correlation with a device selected by the user (P) are displayed on the output device (OD, ARG),
wherein correlation comprises: communication-correlation and/or part-of-the-same-subsystem correlation and/or functional-correlation and/or master-slave-correlation and/or spatial-correlation and/or sensor-actor-correlation.

2. The method according to claim 1, wherein user defined types of devices located in the defined area (Sp1, Sp2) are displayed on the output device (OD, ARG).

3. The method according claim 1 or claim 2, wherein the user defined area (Sp1, Sp2) is illustrated on the output device (OD, ARG) as sphere or as cube or as cuboid.

4. The method according to one of the preceding claims, wherein a device (Dev) selected by the user (P) presents the center point of the user defined area (Sp1, Sp2) of the enclosure (B).

5. The method according to claim 1, wherein user selectable types of correlation are displayed on the output device (OD, ARG).

6. The method according to one of the preceding claims, wherein the user (P) is displayed on the output device (OD, ARG) as a pointer, especially as an avatar (AV1 - AV3) being positioned on the current position of the user (P) in the user defined area (Sp1, Sp2) of the enclosure (B).

7. The method according to claim 6, wherein the pointer, especially the avatar (AV1 - AV3,) illustrated on the output device is kept on track and synchronized with the position of the user by scanning landmark codes (QR) attached in the enclosure (B) and/or by radio and/or audio and/or camera means of the output device (OD, ARG).

8. The method according to one of the preceding claims, wherein the output device (OD, ARG) is a smartphone, and/or a tablet computer, and/or AR-glasses (ARG).

9. The method according to one of the preceding claims, wherein the object model (OM) is a building information model (BIM) and/or a CAD model and/or a UNITY-based rendered model.

10. A Computer program product comprising instructions which, when the program is executed by a computer, cause the computer to carry out the steps of the method of one of the claims 1 to 9.

11. A computer-readable data carrier having stored thereon the computer program product of claim 10.

12. An arrangement for displaying devices (Dev) located in an enclosure (B) on an output device (OD, ARG) of a user (P), the arrangement comprising:
processing means configured to provide an object model (OM) comprising representations (O1 - O9) of the devices (Dev) located and/or equipped in the enclosure (B); and
an output device (OD, ARG) comprising a 3D engine configured to display a user defined area (Sp1, Sp2) of the enclosure (B) on the output device (OD, ARG), wherein devices (Dev) located and/or equipped in the user defined area (Sp1, Sp2) are displayed on the output device (OD, ARG);
wherein all devices (Dev) located in the user defined area (Sp1, Sp2) of the enclosure (B) which are in correlation with a device selected by the user (P) are displayed on the output device (OD, ARG),
wherein correlation comprises: communication-correlation and/or part-of-the-same-subsystem correlation and/or functional-correlation and/or master-slave-correlation and/or spatial-correlation and/or sensor-actor-correlation.

13. The arrangement according to claim 12, wherein the output device (OD, ARG) is configured to display all devices located in the user defined area (Sp1, Sp2) of the enclosure (B) which are in correlation with a device (Dev) selected by the user (P).

14. The arrangement according to claim 13, wherein the output device (OD, ARG) is configured to display user selectable types of correlation.

## Patentansprüche

1. Verfahren zum Anzeigen von Vorrichtungen (Dev), die sich in einem umschlossenen Raum (B) befinden, auf einer Ausgabevorrichtung (OD, ARG) eines Benutzers (P), wobei das Verfahren Folgendes umfasst:
(ST1) Bereitstellen eines Objektmodells (OM), das Darstellungen (O1 - O9) von den Vorrichtungen (Dev) umfasst, die sich in dem umschlossenen Raum (B) befinden und/oder mit denen dieser ausgestattet ist,
(ST2) Bereitstellen einer 3D-Engine, die so konfiguriert ist, dass sie auf der Ausgabevorrichtung (OD, ARG) einen benutzerdefinierten Bereich (Sp1, Sp2) des umschlossenen Raums (B) anzeigt, wobei Vorrichtungen (Dev), die sich in dem benutzerdefinierten Bereich (Sp1, Sp2) befinden und/oder mit denen dieser ausgestattet ist, auf der Ausgabevorrichtung (OD, ARG) angezeigt werden,
wobei alle Vorrichtungen (Dev), die sich in dem benutzerdefinierten Bereich (Sp1, Sp2) des umschlossenen Raums (B) befinden und mit einer vom Benutzer (P) ausgewählten Vorrichtung korrelieren, auf der Ausgabevorrichtung (OD, ARG) angezeigt werden,
wobei eine Korrelation Folgendes umfasst: Kommunikationskorrelation und/oder Bestandteil-des-gleichen-Teilsystems-Korrelation und/oder funktionelle Korrelation und/oder Master-Slave-Korrelation und/oder räumliche Korrelation und/oder Sensor-Aktor-Korrelation.

2. Verfahren nach Anspruch 1, wobei benutzerdefinierte Typen von Vorrichtungen, die sich in dem definierten Bereich (Sp1, Sp2) befinden, auf der Ausgabevorrichtung (OD, ARG) angezeigt werden.

3. Verfahren nach Anspruch 1 oder 2, wobei der benutzerdefinierte Bereich (Sp1, Sp2) als Kugel oder Würfel oder Quader auf der Ausgabevorrichtung (OD, ARG) dargestellt wird.

4. Verfahren nach einem der vorhergehenden Ansprüche, wobei eine von dem Benutzer (P) ausgewählte Vorrichtung (Dev) den Mittelpunkt des benutzerdefinierten Bereichs (Sp1, Sp2) des umschlossenen Raums (B) darstellt.

5. Verfahren nach Anspruch 1, wobei auf der Ausgabevorrichtung (OD, ARG) vom Benutzer auswählbare Korrelationstypen angezeigt werden.

6. Verfahren nach einem der vorhergehenden Ansprüche, wobei der Benutzer (P) als Zeiger, insbesondere als Avatar (AV1 - AV3), der in der aktuellen Position des Benutzers (P) im benutzerdefinierten Bereich (Sp1, Sp2) des umschlossenen Raums (B) positioniert ist, auf der Ausgabevorrichtung (OD, ARG) angezeigt wird.

7. Verfahren nach Anspruch 6, wobei der Zeiger, insbesondere der Avatar (AV1 - AV3), der auf der Ausgabevorrichtung dargestellt ist, die Position des Benutzers verfolgt und durch Scannen von im umschlossenen Raum (B) angebrachten Orientierungspunkt-Codes (QR) und/oder über Funk- und/oder Ton- und/oder Kameramittel der Ausgabevorrichtung (OD, ARG) damit synchronisiert bleibt.

8. Verfahren nach einem der vorhergehenden Ansprüche, wobei es sich bei der Ausgabevorrichtung (OD, ARG) um ein Smartphone und/oder einen Tablet-Computer und/oder eine AR-Brille (ARG) handelt.

9. Verfahren nach einem der vorhergehenden Ansprüche, wobei es sich bei dem Objektmodell (OM) um ein Gebäudedatenmodell (BIM) und/oder ein CAD-Modell und/oder ein auf UNITY-Basis gerendertes Modell handelt.

10. Computerprogrammprodukt mit Anweisungen, die, wenn das Programm von einem Computer ausgeführt wird, diesen dazu veranlassen, die Schritte des Verfahrens nach einem der Ansprüche 1 bis 9 durchzuführen.

11. Computerlesbarer Datenträger, auf dem das Computerprogrammprodukt nach Anspruch 10 gespeichert ist.

12. Anordnung zum Anzeigen von Vorrichtungen (Dev), die sich in einem umschlossenen Raum (B) befinden, auf einer Ausgabevorrichtung (OD, ARG) eines Benutzers (P), wobei die Anordnung Folgendes umfasst:
Verarbeitungsmittel, die so konfiguriert sind, dass sie ein Objektmodell (OM) bereitstellen, das Darstellungen (O1 - O9) von den Vorrichtungen (Dev) umfasst, die sich in dem umschlossenen Raum (B) befinden und/oder mit denen dieser ausgestattet ist, und
eine Ausgabevorrichtung (OD, ARG), die eine 3D-Engine umfasst, welche so konfiguriert ist, dass sie auf der Ausgabevorrichtung (OD, ARG) einen benutzerdefinierten Bereich (Sp1, Sp2) des umschlossenen Raums (B) anzeigt, wobei Vorrichtungen (Dev), die sich in dem benutzerdefinierten Bereich (Sp1, Sp2) befinden und/oder mit denen dieser ausgestattet ist, auf der Ausgabevorrichtung (OD, ARG) angezeigt werden,
wobei alle Vorrichtungen (Dev), die sich in dem benutzerdefinierten Bereich (Sp1, Sp2) des umschlossenen Raums (B) befinden und mit einer vom Benutzer (P) ausgewählten Vorrichtung korrelieren, auf der Ausgabevorrichtung (OD, ARG) angezeigt werden,
wobei eine Korrelation Folgendes umfasst: Kommunikationskorrelation und/oder Bestandteil-desgleichen-Teilsystems-Korrelation und/oder funktionelle Korrelation und/oder Master-Slave-Korrelation und/oder räumliche Korrelation und/oder Sensor-Aktor-Korrelation.

13. Anordnung nach Anspruch 12, wobei die Ausgabevorrichtung (OD, ARG) so konfiguriert ist, dass sie alle Vorrichtungen anzeigt, die sich in dem benutzerdefinierten Bereich (Sp1, Sp2) des umschlossenen Raums (B) befinden und mit einer vom Benutzer (P) ausgewählten Vorrichtung (Dev) korrelieren.

14. Anordnung nach Anspruch 13, wobei die Ausgabevorrichtung (OD, ARG) so konfiguriert ist, dass sie vom Benutzer auswählbare Korrelationstypen anzeigt.

## Revendications

1. Procédé d'affichage de dispositifs (Dev) situés dans une enceinte (B) sur un dispositif de sortie (OD, ARG) d'un utilisateur (P), le procédé comprenant :
(ST1) la fourniture d'un modèle objet (OM) comprenant les représentations (O1 - O9) des dispositifs (Dev) situés et/ou intégrés dans l'enceinte (B) ;
(ST2) la fourniture d'un moteur 3D configuré pour afficher une zone définie par l'utilisateur (Sp1, Sp2) de l'enceinte (B) sur le dispositif de sortie (OD, ARG), dans lequel les dispositifs (Dev) situés et/ou intégrés dans la zone définie par l'utilisateur (Sp1, Sp2) sont affichés sur le dispositif de sortie (OD, ARG) ;
dans lequel tous les dispositifs (Dev) situés dans la zone définie par l'utilisateur (Sp1, Sp2) de l'enceinte (B) qui sont en corrélation avec un dispositif sélectionné par l'utilisateur (P) sont affichés sur le dispositif de sortie (OD, ARG),
dans lequel la corrélation comprend : une corrélation de communication et/ou une corrélation liée à l'appartenance au même sous-système et/ou une corrélation fonctionnelle et/ou une corrélation maître-esclave et/ou une corrélation spatiale et/ou une corrélation capteur-actionneur.

2. Procédé selon la revendication 1, dans lequel les types définis par l'utilisateur de dispositifs situés dans la zone définie (Sp1, Sp2) sont affichés sur le dispositif de sortie (OD, ARG).

3. Procédé selon la revendication 1 ou la revendication 2, dans lequel la zone définie par l'utilisateur (Sp1, Sp2) est illustrée sur le dispositif de sortie (OD, ARG) sous la forme d'une sphère ou d'un cube ou d'un parallélépipède rectangle.

4. Procédé selon l'une des revendications précédentes, dans lequel un dispositif (Dev) sélectionné par l'utilisateur (P) présente le point central de la zone définie par l'utilisateur (Sp1, Sp2) de l'enceinte (B).

5. Procédé selon la revendication 1, dans lequel les types de corrélation sélectionnables par l'utilisateur sont affichés sur le dispositif de sortie (OD, ARG).

6. Procédé selon l'une des revendications précédentes, dans lequel l'utilisateur (P) est affiché sur le dispositif de sortie (OD, ARG) sous forme de pointeur, notamment sous forme d'avatar (AV1 - AV3) qui est positionné sur la position actuelle de l'utilisateur (P) dans la zone définie par l'utilisateur (Sp1, Sp2) de l'enceinte (B).

7. Procédé selon la revendication 6, dans lequel le pointeur, notamment l'avatar (AV1 - AV3) illustré sur le dispositif de sortie, est maintenu en concordance avec la position de l'utilisateur et synchronisé avec celle-ci par balayage de codes de repères (QR) fixés dans l'enceinte (B) et/ou par des moyens radio et/ou audio et/ou caméra du dispositif de sortie (OD, ARG).

8. Procédé selon l'une des revendications précédentes, dans lequel le dispositif de sortie (OD, ARG) est un téléphone intelligent et/ou une tablette et/ou des lunettes de réalité augmentée (ARG).

9. Procédé selon l'une des revendications précédentes, dans lequel le modèle objet (OM) est un modèle d'informations de bâtiment (BIM) et/ou un modèle CAD et/ou un modèle rendu basé sur UNITY.

10. Produit de programme informatique comprenant des instructions qui, lorsque le programme est exécuté par un ordinateur, amènent l'ordinateur à réaliser les étapes du procédé selon l'une des revendications 1 à 9.

11. Support de données lisible par ordinateur sur lequel est stocké le produit de programme informatique selon la revendication 10.

12. Agencement d'affichage de dispositifs (Dev) situés dans une enceinte (B) sur un dispositif de sortie (OD, ARG) d'un utilisateur (P), l'agencement comprenant :
des moyens de traitement configurés pour fournir un modèle objet (OM) comprenant des représentations (O1 - O9) des dispositifs (Dev) situés et/ou intégrés dans l'enceinte (B) ; et
un dispositif de sortie (OD, ARG) comprenant un moteur 3D configuré pour afficher une zone définie par l'utilisateur (Sp1, Sp2) de l'enceinte (B) sur le dispositif de sortie (OD, ARG), dans lequel les dispositifs (Dev) situés et/ou intégrés dans la zone définie par l'utilisateur (Sp1, Sp2) sont affichés sur le dispositif de sortie (OD, ARG) ;
dans lequel tous les dispositifs (Dev) situés dans la zone définie par l'utilisateur (Sp1, Sp2) de l'enceinte (B) qui sont en corrélation avec un dispositif sélectionné par l'utilisateur (P) sont affichés sur le dispositif de sortie (OD, ARG),
dans lequel la corrélation comprend : une corrélation de communication et/ou une corrélation liée à l'appartenance au même sous-système et/ou une corrélation fonctionnelle et/ou une corrélation maître-esclave et/ou une corrélation spatiale et/ou une corrélation capteur-actionneur.

13. Agencement selon la revendication 12, dans lequel le dispositif de sortie (OD, ARG) est configuré pour afficher tous les dispositifs situés dans la zone définie par l'utilisateur (Sp1, Sp2) de l'enceinte (B) qui sont en corrélation avec un dispositif (Dev) sélectionné par l'utilisateur (P).

14. Agencement selon la revendication 13, dans lequel le dispositif de sortie (OD, ARG) est configuré pour afficher les types de corrélation sélectionnables par l'utilisateur.
